# EUROPÄISCHE PATENTSCHRIFT

(11) **EP 0 460 399 B1**
(45) Veröffentlichungstag und Bekanntmachung des Hinweises auf die Patenterteilung: **31.08.1994**
(21) Anmeldenummer: 91107131.4
(22) Anmeldetag: 02.05.1991
(51) Int. Cl.: F24D 3/08, F24D 19/10, F04D 15/00, F04D 9/00

(54) **Kreiselpumpe und damit ausgestattete Gastherme**
Centrifugal pump and gasboiler including the same
Pompe centrifuge et chaudière à gaz avec une telle pompe

(30) Priorität: 04.05.1990 DE 4014409
(43) Veröffentlichungstag der Anmeldung: 11.12.1991
(73) Patentinhaber: GRUNDFOS INTERNATIONAL A/S, DK-8850 Bjerringbro (DK)
(72) Erfinder: Jensen, Niels Due, DK-8850 Bjerringbro (DK); Nielsen, Kristian, DK-8850 Bjerringbro (DK); Jakobsen, Gerhard Munk, DK-8900 Randers (DK)
(74) Vertreter: Wilcken, Thomas, Dipl.-Ing.

(56) Entgegenhaltungen:
- DE-A- 2 000 764
- DE-A- 3 741 663
- FR-A- 2 198 558
- GB-A- 2 199 080

## Beschreibung

Die Erfindung geht aus von einer Gastherme zur Raumbeheizung und Warmwasserbereitung gemäß dem Oberbegriff des Patentanspruchs 1. Eine derartige Heizvorrichtung ist in der DE-A-37 41 663 beschrieben.

Bei dem in dieser Druckschrift beschriebenen Zentralheizungskessel ist der Saugstutzen der Umwälzpumpe an ein wasserführendes Kesselglied des als Gliederkessel ausgebildeten Kessels angeschlossen, wobei die Pumpe in einen abgetrennten Zwischenraum fördert. Diesem Zwischenraum ist eine gesonderte Kammer nachgeordnet, von der zwei Abförderstutzen abgehen, die über ein Verschließorgan in der Kammer wechselweise mit dem aus dem Zwischenraum ankommenden erhitzten Wasserstrom versorgt werden, um Heizwasser in den einen oder anderen Heizkreislauf zu liefern. Das Verschließorgan wird über einen externen Motor angetrieben. Eine derartige Anordnung der Umwälzpumpe mit einer dieser außerhalb derselben nachgeordneten Heizwasserverteileinrichtung schafft zwar eine kompaktere Heizkesselanlage; diese ist jedoch für sogenannte Gasthermen, die in den Wohnungen selbst und nicht in Kellerräumen oder Extraräumen von Häusern installiert werden, noch zu platzraubend.

Des weiteren gehören auch sogenannte Gasthermen zum praktizierten Stand der Technik. Sie umfassen neben einer Umwälzpumpe, die den Wasserförderstrom im gesamten Wasserumlaufsystem umwälzt und diesen Strom letztlich zur Wiederaufwärmung zu der Heizeinrichtung der Gastherme zurückfördert, eine Vielzahl von Ventilen, Reglern, Sensoren usw., die zur Steuerung der Umwälzpumpe und der Gastherme dienen. Diese Ausrüstungsteile sind jeweils unterschiedlicher Art und untereinander sowie mit dem Wasserumlaufsystem mittels wasserführender Leitungen und elektrischer Leitungen in Verbindung mit elektrischen Schalteinheiten verbunden. Diese Ausrüstung führt zu einem komplizierten Aufbau der Gastherme mit dementsprechenden Herstellungskosten, abgesehen davon, daß die genannten Ausrüstungsteile in der Gastherme an verschiedenen Stellen montiert sind und daher bei Wartungsarbeiten oft schwer zugänglich sind und somit die Wartung und Reparatur der Gastherme unnötig verteuern. Der Aufbau der Gastherme wird auch bei Verwendung von zwei Umwälzpumpen nicht wesentlich einfacher, denn es muß dafür gesorgt werden, daß die für die Warmwasserbereitung verwendete Umwälzpumpe gegenüber derjenigen für den Heizkreislauf vorrangig arbeitet, wozu eine entsprechende Beschaltungsausrüstung und Verrohrung für die beiden Pumpen vorgesehen sein muß.

Des weiteren sind Pumpen als solche bekannt, die mit einem Saugstutzen und mit zwei integrierten Druckstutzen ausgerüstet sind, zum Beispiel durch die DE-A-37 15 833 und durch die GB-A-21 99 080. Die Pumpe nach der letztgenannten Druckschrift weist auch eine interne, durch den Förderstrom der Pumpe aufgrund deren Drehrichtungsumkehr betätigbare Leiteinrichtung auf, die entweder den einen oder den anderen Druckstutzen absperrt, je nachdem, welche Drehrichtung das Laufrad der Pumpe gerade aufweist. Bei dieser Leiteinrichtung besteht jedoch die Gefahr, daß sie sich in ihrer Schwenklagerung festsetzen kann, und zwar aufgrund der Ablagerungen und Ausfällungen aus dem Förderstrom. Dadurch ist die Funktion der Pumpe dann erheblich beeinträchtigt.

Die Aufgabe der Erfindung besteht in der Verbesserung einer Gastherme der einleitend angeführten Art dahingehend, daß die Gastherme in ihrem Aufbau wesentlich vereinfacht ist und auch für Wartungs- und Reparaturarbeiten erheblich besser zugänglich ist. Ferner soll sichergestellt werden, daß der Primärwärmetauscher der Gastherme vor Überhitzung geschützt ist und daß eine sichere und sehr gute Entlüftung des in den Kreisläufen zirkulierenden Wassers erreicht wird.

Die Lösung dieser Aufgabe ist in dem Kennzeichen des Patentanspruchs 1 angegeben.

Die erfindungsgemäße Gastherme ist in ihrem Aufbau wesentlich vereinfacht, weil ein sehr großer Anteil der vorerwähnten Ausrüstungsteile einschließlich der wasserführenden und elektrischen Leitungen für die Gastherme entfällt, und zwar aufgrund der Bauart der Pumpe, nämlich daß sie mit einem Saug- und mit zwei Druckstutzen und mit einer sicher funktionierenden inneren, druckseitigen Leiteinrichtung ausgestattet ist, die bei Drehrichtungsumkehr oder Drehrichtungsumkehr und Drehzahländerung des Laufrades der Pumpe den Förderstrom durch den einen, den anderen oder durch beide Druckstutzen leitet, und aufgrund der Plazierung der Pumpe in dem Kreislaufsystem der Gastherme, nämlich daß sie in der Vorlaufstrecke des Primärwärmetauschers angeordnet ist. Die entsprechend den Wasserverbrauchsanforderungen in den beiden Kreisläufen elektrisch gesteuerte Umwälzpumpe kann nun aufgrund der wegfallenden Ausrüstungsteile an einer für Wartungs- und Reparaturarbeiten günstigen Selle in der Gastherme angeordnet sein, so daß diese Arbeiten kostengünstig und schnell ausgeführt werden können. Außerdem ergibt sich durch die vereinfachte Bauweise der Gastherme ein günstigerer Herstellungspreis derselben.

Mittels der an dem Gehäuse der Kreiselpumpe angeordneten, Entlüftungseinrichtungen für das sie durchströmende Wasser enthaltenden Rückströmkammer mit Anschlüssen für den Wasserücklauf wenigstens aus den beiden Heizkreisläufen zu dem Primärwärmetauscher und dem vom Druckraum der Kreiselpumpe zu der Rückströmkammer führenden Bypaß mit einem Absperrventil ist die Gastherme noch einfacher gestaltet, wodurch deren Wartungs- und Reparaturfreundlichkeit noch weiter gesteigert und wodurch gesichert ist, daß der Primärwärmetauscher der Gastherme vor Überhitzung geschützt ist, weil die Kreiselpumpe sofort Wasser zu dem Primärwärmetauscher über die Rückströmkammer zurückleiten kann, und daß eine sichere Entlüftung des zirkulierenden Wassers erreicht wird.

Die Erfindung ist nachstehend anhand der in den Zeichnungen dargestellten Ausführungsbeispiele näher erläutert. Es zeigen:
- Figur 1: ein erstes Ausführungsbeispiel einer Gastherme in schematischer Darstellung,
- Figur 2: eine Kreiselpumpe im Axialschnitt für die Gastherme nach Figur 1,
- Figur 3: einen Schnitt durch die Kreiselpumpe nach der Linie C-C in Figur 2,
- Figuren 4,5 und 6: vereinfachte Schnitte durch die Pumpe nach der Linie B-B in Figur 2, wobei der saugstutzen der Pumpe weggelassen ist,
- Figur 7: eine gegenüber dem Beispiel nach Figur 1 abgeänderte Gastherme in schematischer Darstellung.

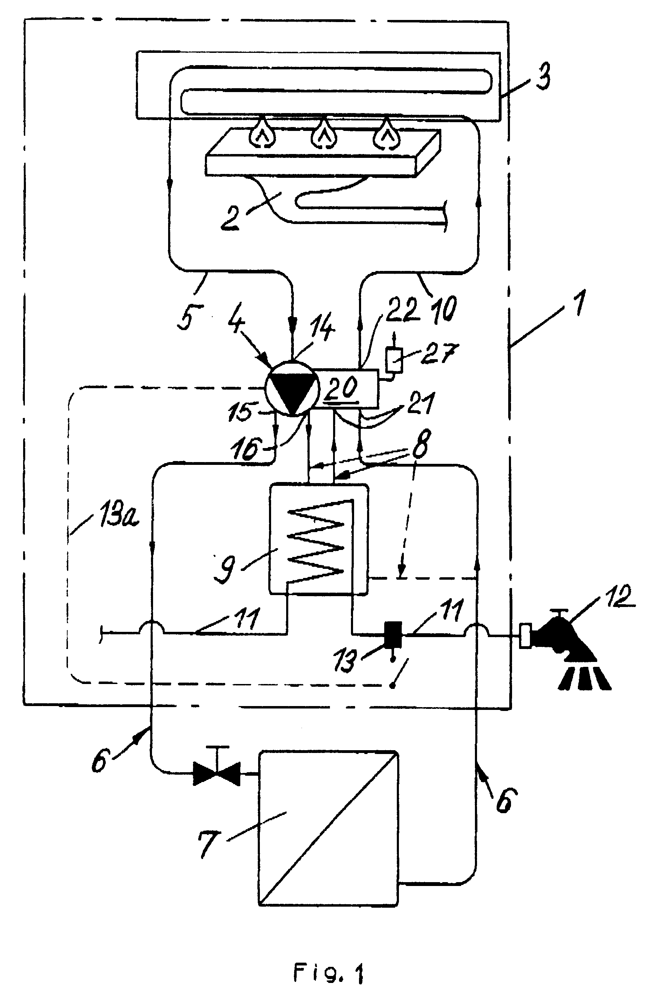

Nach Figur 1 enthält die Gastherme 1 einen Gasheizer 2, einen vom Gasheizer beheizten Primärwärmetauscher 3, eine Kreiselpumpe 4, die in die Vorlaufstrecke 5 des Wärmetauschers 3 eingegliedert ist, einen ersten Heizkreislauf 6 zur Raumbeheizung, der die verschiedenen Raumheizkörper 7 umfaßt, einen zweiten Heizkreislauf 8, der einen Sekundärwärmetauscher 9 umfaßt, und eine Rücklaufleitung 10, in welcher das aus den Heizkreislaufläufen zu der Pumpe 4 zurückkehrende Wasser zu dem Primärwärmetauscher 3 mittels der Pumpe 4 zurückgeführt wird. Eine Brauchwasserleitung 11, die zunächst kaltes Wasser führt, durchläuft den Sekundärwärmetauscher 9, der das kalte Wasser erwärmt, das von dort zur Wasserverbrauchstelle 12 zum Beispiel eines Privathaushaltes geführt und dort entnommen wird. Die Verbrauchswasserleitung 11 weist einen Schalter 13 auf, der bei Wasserentnahme an der Stelle 12 betätigt wird und über eine elektrische Leitung 13a den Antrieb der Pumpe 4 einschaltet, damit diese vorrangig erhitztes Wasser zu dem Sekundärwärmetauscher 9 fördert.

Die Beschickung des Sekundärwärmetauschers 9 mit erhitztem Wasser erfolgt bei diesem Beispiel direkt von der Pumpe 4. Auch die Rückleitung des Wassers aus dem Wärmetauscher 9 erfolgt direkt zur Pumpe 4; sie kann aber auch zum Rücklauf des ersten Heizkreislaufes 6 erfolgen, wie es gestrichelt in Figur 1 angegeben ist, wo der zweite Heizkreislauf mit 8 bezeichnet ist.

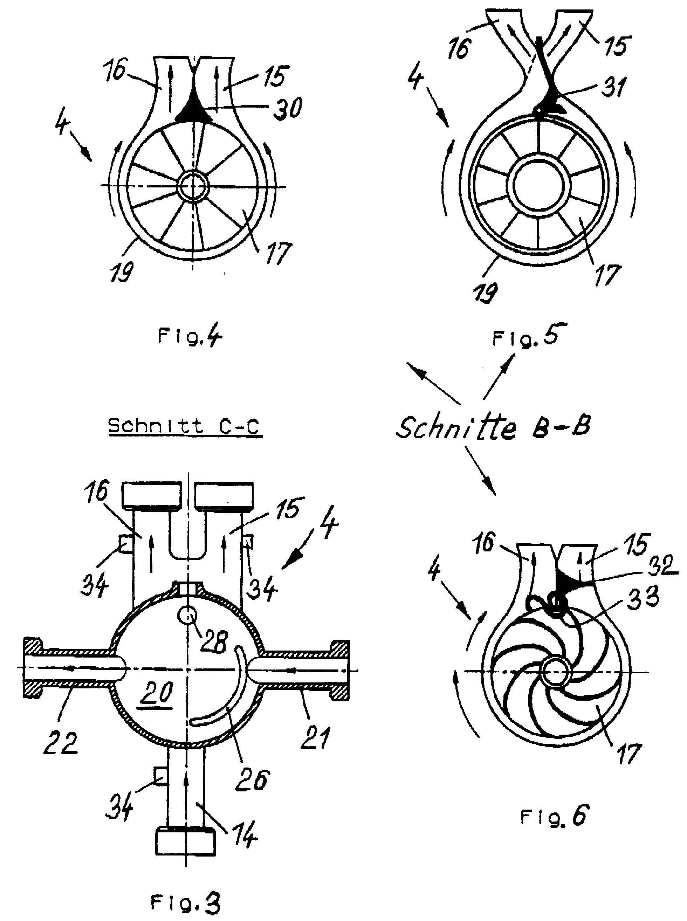

Wie insbesondere aus Figur 3 deutlich zu erkennen ist, weist die Kreiselpumpe 4 einen Saugstutzen 14 und zwei Druckstutzen 15 und 16 auf. Das erhitzte Wasser aus dem Primärwärmetauscher 3 kann somit durch den einen oder durch den anderen oder durch beide Druckstutzen 15,16 von der Pumpe 4 abgefördert werden, wie noch klarer wird. Das Laufrad 17 der Kreiselpumpe 4 wird durch einen Elektromotor 18 angetrieben, der in üblicher Weise beschaltet und gesteuert wird und des weiteren aus einem sogenannten Naßlaufmotor bestehen kann.

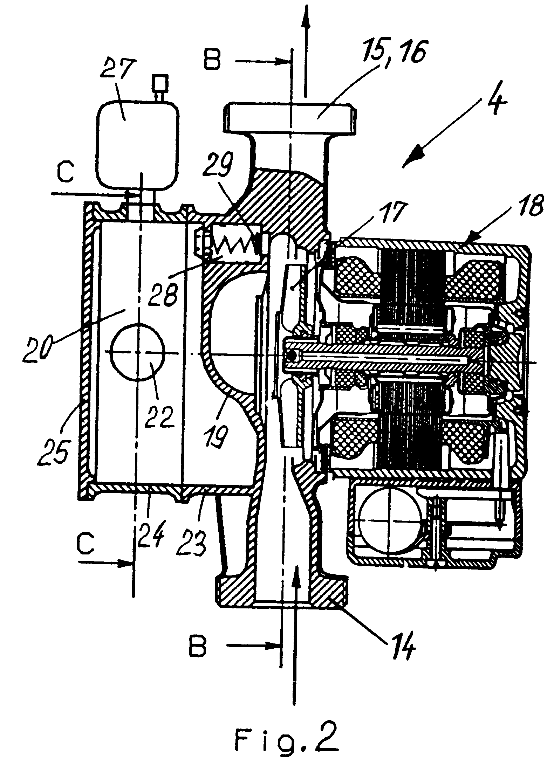

Wie insbesondere aus den Figuren 2 und 3 deutlich zu erkennen ist, ist das Gehäuse 19 der Kreiselpumpe 4 mit einer Rückströmkammer 20 versehen, die wiederum mehrere Anschlüsse 21 und 22 aufweist, an welchen die Rücklaufleitungen der beiden Heizkreisläufe 6 und 8 angeschlossen sind. Obwohl in Figur 3 nur zwei Anschlüsse gezeigt sind, können es natürlich auch noch mehr sein, wie zum Beispiel aus Figur 1 entnehmbar ist, wo z.B. zwei Einlaufstutzen 21 gezeigt sind.

Die Kammer 20 kann in der Weise ausgestaltet sein, daß am Pumpengehäuse 19 ein Gehäuseteil 23 der Kammer 20 einstückig angegossen ist, an dem wiederum ein weiteres Gehäuseteil 24 mit einem Deckel 25 befestigt ist. Die Rückströmkammer 20 ist mit einer Entlüftungseinrichtung versehen, um Luft aus dem rückströmenden, die Kammer zum Primärwärmetauscher 3 durchströmenden Wasser zu entfernen. Hierzu kann die Kammer 20 mit einer Prallrippe 26 versehen sein, die beispielsweise einstückig an dem Pumpengehäuse 19 oder am Deckel 25angegossen ist. Der besseren Übersicht wegen ist die Prallrippe 26 in Figur 2 weggelassen. Des weiteren ist an die Rückströmkammer ein üblicher Entlüfter 27 angeschlossen, um die in der Kammer 20 aus dem rückströmenden Wasser ausgeschiedene Luft in die Atmosphäre abzulassen.

Um sicherzustellen, daß der Primärwärmetauscher 3 der Gastherme 1 durch den Gasheizer 2 durch unplanmäßigen Betrieb nicht beschädigt werden kann, ist der Druckraum der Kreiselpumpe 4 über einen Bypaß 28 mit der Rückströmkammer 20 verbunden (Figur 2). Dieser Bypaß ist mit einem Ventil 29 ausgestattet, um zu sichern, daß der Bypaß 28 nur im vorbestimmten Fall geöffnet wird.

In den Figuren 4, 5 und 6 ist schematisch gezeigt, wie die beiden Druckstutzen 15 und 16 der Kreiselpumpe 4 beschickt werden, wenn die Drehrichtung und/oder die Drehzahl des Pumpenlaufrades 17 geändert wird. Hierzu ist innerhalb der Pumpe in deren Druckraum im Bereich der beiden Druckstutzen 15 und 16 eine Leiteinrichtung vorgesehen.

Im Fall der Figur 4 besteht die Leiteinrichtung aus einem feststehenden, dreieckigen Leitteil 30, das zwischen den beiden Druckstutzen und nahe dem Laufrad 17 angeordnet ist. Wie aus den dargestellten Pfeilen ersichtlich ist, wird der Förderstrom je nach Drehrichtung des Laufrades 17 entweder durch den einen oder durch den anderen Druckstutzen abgefördert. Abhängig von der Formgestaltung des Leitteils 30 und/oder des Pumpengehäuses 19 ist es möglich, daß durch beide Stutzen 15,16 gleichzeitig abgefördert werden kann, wobei der eine oder andere Stutzen einen stärkeren Abförderstrom übernehmen kann.

Im Fall der Figur 5 ist ein sich selbst positionierendes, etwa L-förmig ausgebildetes Leitteil 31 vorgesehen, das zwischen den beiden Druckstutzen 15 und 16 eingespannt ist und aus einem biegbaren Kunststoffmaterial hoher Dauerfestigkeit besteht. Die feste Einspannung zwischen den beiden Druckstutzen hat den Vorteil, daß eventuelle Ablagerungen und/oder Ausfällungen aus dem Förderstrom, die sich eventuell an dem Leitteil abgesetzt haben, durch dessen Bewegung von selbst wieder entfernen. Dadurch wird die volle Funktionsfähigkeit des Leitteils 31 jederzeit gewährleistet. Man erkennt auch hier, daß durch das Leitteil 31 bei der jeweils gewählten, durch die Pfeile angedeuteten Drehrichtung des Pumpenlaufrades 17 in der einen oder anderen Endstellung, in der es an dem Pumpengehäuse 19 anliegt, entweder der eine oder der andere Druckstutzen 15,16 beschickt wird.

Die Abförderung durch die beiden Druckstutzen 15,16 der Pumpe 4 kann auch dadurch gesteuert werden, daß in den vorstehenden Fällen außer der Änderung der Drehrichtung des Pumpenlaufrades 17 gleichzeitig auch dessen Drehzahl geändert wird, wodurch ein größerer oder kleinerer Mengenstrom in dem einen oder anderen Druckstutzen erreicht wird.

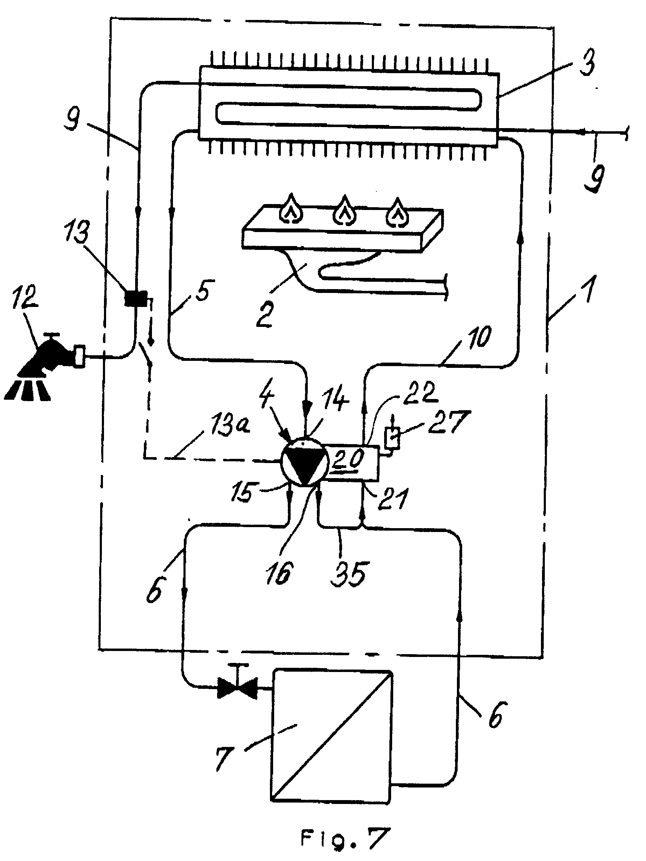

Im Fall der Figur 6 ist ebenfalls ein bewegliches Leitteil 32 gezeigt, das jedoch mittels einer Feder 33 vorgespannt ist. Dieses Leitteil 32 ist etwa dreieckig ausgebildet und um eine zur Drehachse des Pumpenlaufrades parallelen Achse verschwenkbar, derart, daß entweder der eine oder der andere Druckstutzen vollständig geschlossen ist, während der jeweils andere Stutzen vollständig offen ist.Das Leitteil kann auch in eine Mittelstellung verschwenkt werden, so daß in diesem Fall beide Stutzen 15,16 mit dem abgehenden Förderstrom beschickt werden. Die jeweils gewünschte Stellung des Leitteils 32 wird durch die jeweils gewählte Drehzahl des Pumpenlaufrades 17 bestimmt. In Figur 6 ist gezeigt, daß die Kraft der Feder 33 vollständig überwunden ist, so daß das Leitteil 32 den rechten Druckstutzen 15 vollständig verschließt. Bei einer auf die Kraft der Feder 33 abgestimmten Drehzahl des Laufrades 17 wird das Leitteil eine Mittelstellung einnehmen, so daß dann durch beide Druckstutzen 15,16 Wasser abfließt. Diese Drehzahl wird niedriger sein als im vorgenannten Fall. Bei noch geringerer Drehzahl des Pumpenlaufrades 17 wird das Leitteil 32 vollständig nach links verschwenkt sein, so daß dann der linke Druckstutzen 16 vollständig geschlossen ist, während der rechte Druckstutzen 15 vollständig geöffnet ist.In diesem Fall kann alternativ oder zusätzlich die Drehrichtung des Pumpenlaufrades 17 geändert werden.

Um einen Umlauf des Wassers durch die Heizkreisläufe und durch die Gastherme vorzusehen, der sicher bei den gewünschten Temperaturen der jeweiligen Kreisläufe stattfindet, ist die Kreiselpumpe 4 sowohl zuförderseitig als auch abförderseitig mit entsprechenden Temperaturaufnehmern 34 versehen, mit deren Hilfe der Antriebsmotor 18 der Pumpe 4 entsprechend betrieben wird.

Das in Figur 7 gezeigte, abgeänderte Ausführungsbeispiel einer Gastherme 1 ist nachstehend nur in denjenigen Teilen beschrieben, die im Vergleich zum Beispiel nach Figur 1 abgeändert sind. Im übrigen stimmt das abgeänderte Beispiel mit dem vorstehend beschriebenen Beispiel überein und trägt in dieser Beziehung die gleichen Bezugsziffern. Die wesentlichste Änderung bei dem Beispiel nach Figur 7 besteht darin, daß der Sekundärwärmetauscher 9 in dem Primärwärmetauscher 3 integriert ist. Das bedeutet, daß der Primärwärmetauscher so ausgebildet ist, daß er auch die Funktion eines Sekundärwärmetauschers übernehmen kann. Hierzu ist zusätzlich die Kaltwasserleitung 9 durch den Primärwärmetauscher hindurchgeführt, so daß erwärmtes Brauchwasser zu der Entnahmestelle 12 gelangt, wie es in Figur 7 gezeigt ist. In weiterer Abänderung ist der Druckstutzen 16 über eine kurze Rückströmleitung 35 mit dem Rücklauf des ersten Heizkreislaufes 6 verbunden, so daß eine verkürzte Rückströmung von Wasser durch die Rückströmkammer 20 und die Rücklaufleitung 10 zum Primärwärmetauscher 3 erfolgen kann. Eine solche Rückströmung ist immer dann erforderlich, wenn vermieden werden muß, daß sich das Wasser im Primärwärmetauscher 3 nicht zu stark erhitzen darf, um dessen Beschädigung zu vermeiden. Eine solche Lösung ist zum Beispiel dann sehr vorteilhaft, wenn der Druckraum der Kreiselpumpe 4 nicht über einen Bypaß mit der Rückströmkammer 20 verbunden ist. In alternativer Ausgestaltung kann die Rückströmleitung 35 auch an einen gesonderten Rückströmstutzen der Rückströmkammer angeschlossen sein. In Figur 1 ist zum Beispiel gezeigt, daß die Rückströmkammer 20 zwei Eingangsstutzen 21 und einen Abgangsstutzen 22 aufweist.

Es ist nun die Funktionsweise der vorstehend beschriebenen Gastherme erläutert. Da der allgemeine Betrieb einer Gastherme bekannt ist, ist die nachstehende Funktionserläuterung nur auf die erfindungsbedingten Unterschiede beschränkt. In üblicher Weise wird der erste Heizkreislauf für die Raumbeheizung mit den Heizkörpern 7 mittels der Kreiselpumpe 4 aus der Vorlaufleitung 5 des Primärwärmetauschers 3 beschickt. Wenn gleichzeitig warmes Wasser aus der Zapfstelle 12 benötigt wird, wird mittels der Schaltung 13,13a die Drehrichtung und/der die Drehzahl des Motors 18 der Pumpe 4 geändert, so daß nun der zweite Heizkreislauf für den Sekundärwärmetauscher 9 vorrangig von der Kreiselpumpe 4 beschickt wird, um warmes Wasser für die Zapfstelle 12 zu erzeugen. Hierbei erfolgt im Inneren der Pumpe 4 mit Hilfe der inneren Leiteinrichtungen 30,31,32 eine entsprechende Umschaltung des die Pumpe durchströmenden Wassers. Im allgemeinen reicht es aus, daß während der Beschickung des Sekundärwärmetauschers mit Warmwasser der erste Heizkreislauf 6 kurzzeitig nicht beschickt wird. Wenn aber auch eine gleichzeitige Beschickung des ersten Heizkreislaufes 6 gesichert sein soll, ist z.B. eine Kreiselpumpe 4 mit dem Leitteil 32 vorteilhaft, da sich dieses Leitteil dann entsprechend der gewählten Drehzahl des Pumpenlaufrades 17 entsprechend in Zwischenstellungen zwischen seinen beiden Endstellungen einstellen kann, so daß beide Druckstutzen 15 und 16 und damit beide Kreisläufe 6 und 8 beschickt werden.

Die Luftabscheidung aus dem Wasser des gesamten Systems erfolgt dadurch, daß sich die Luft in der Rückströmkammer 20 sammelt, und zwar unter Mitwirkung der Prallrippe 26 der Kammer 20, wobei die angesammelte Luft über den Entlüfter 27 in die Athmosphäre abgelassen wird. Sinngemäß erfolgt auch der Betrieb des Ausführungsbeispiels nach Figur 7 wie vorstehend erläutert.

## Patentansprüche

1. Gastherme zur Raumbeheizung und Warmwasserbereitung, mit einem gasbeheizten Primärwärmetauscher (3), der in einen ersten Heizkreislauf (6) zur Raumbeheizung sowie in einen zweiten Heizkreislauf (8) eingebunden ist, wobei der zweite Kreislauf gegebenenfalls einen Sekundärwärmetauscher (9) in der Gastherme (1) aufweist, mit einer motorgetriebenen, leistungsveränderbaren Kreiselpumpe (4), deren Saugstutzen (14) im Vorlauf (5) des Primärwärmetauschers (3) vorgesehen ist, sowie mit einer von der Pumpe gespeisten Druckstutzeneinrichtung zur Förderstromumwälzung in den Kreisläufen (6, 8), wobei vor der Druckstutzeneinrichtung eine Wasserleiteinrichtung (30, 31, 32) zur wechselweisen Zuführung des im Primärwärmetauscher (3) erhitzten Förderstroms zu den Heizkreisläufen vorgesehen ist, dadurch gekennzeichnet,
daß die Druckstutzeneinrichtung aus zwei am Gehäuse (19) der Kreiselpumpe (4) angeordneten Druckstutzen (15, 16) besteht, deren einer zuförderseitig an den ersten (6) und deren anderer zuförderseitig an den zweiten (8) Heizkreislauf oder an den Rücklauf des ersten Heizkreislaufes (6) angeschlossen ist,
daß die Zuförderung des die Kreiselpumpe (4) durchströmenden heißen Förderstromes durch Drehrichtungsumkehr oder durch Drehrichtungsumkehr und Drehzahländerung des Pumpenlaufrades (7) in Verbindung mit einer innerhalb des Pumpengehäuses (19) im Bereich vor den beiden druckstutzen (15,16) vorgesehenen Wasserleiteinrichtung (30) steuerbar ist,
daß an dem Gehäuse (19) der Kreiselpumpe (4) eine Rückströmkam- mer (20) mit Anschlüssen (21,22) für den Wasserrücklauf wenigstens aus den beiden Heizkreisläufen (6,8) zu dem Primärwärmetauscher (1) und mit einer Entlüftungseinrichtung (26,27) vorgesehen ist und daß ein vom Druckraum der Kreiselpumpe (4) zu der Rückströmkam- mer (2) führender Bypaß (28) mit einem Ventil (29) vorgesehen ist.

2. Gastherme nach Anspruch 1, dadurch gekennzeichnet, daß die Entlüftungseinrichtung eine in der Rückströmkammer (20) vorgesehene Prallrippe (26) für das in diese Kammer einströmende Wasser umfaßt.

3. Gastherme nach Anspruch 1, dadurch gekennzeichnet, daß die Wasserleiteinrichtung in dem Pumpengehäuse (19) aus einem zwischen dem Druckstutzen (15,16) angeordneten feststehenden (30) oder durch Strömungskräfte stutzenschließend positionierbaren Leitteil (31,32) besteht.

4. Gastherme nach Anspruch 3, dadurch gekennzeichnet, daß das positionierbare Leitteil (31) ein biegbares und zwischen den beiden Druckstutzen (15,16) fest eingespanntes Bauteil ist.

5. Gastherme nach Anspruch 1, dadurch gekennzeichnet, daß die Kreiselpumpe (4) zuförderseitig und abförderseitig mit Temperatur- aufnehmern (34) versehen ist.

## Claims

1. Gas boiler for room heating and hot water preparation, with a gas-fired primary heat exchanger (3) which is integrated in a first heating circuit (6) for room heating as well as in a second heating circuit (8), wherein the second circuit comprises if occasion arises a secondary heat exchanger (9) in the gas boiler (1), with a motor-driven, variable-output centrifugal pump (4) of which the suction connection (14) is provided in the flow (5) of the primary heat exchanger (3), as well as with a pressure connection device supplied by the pump for circulating the pumped stream in the circuits (6, 8), wherein in front of the pressure connection device is provided a water conducting device (30, 31, 32) for alternately delivering to the heating circuits the pumped stream which is heated in the primary heat exchanger (3), characterised in that the pressure connection device consists of two pressure connections (15, 16) which are arranged on the housing (19) of the centrifugal pump (4) and of which one is connected on the input side to the first heating circuit (6) and the other is connected on the input side to the second heating circuit (8) or to the return of the first heating circuit (6), in that input of the hot pumped stream flowing through the centrifugal pump (4) can be controlled by reversal of the direction of rotation or by reversal of the direction of rotation and variation of the speed of the pump impeller (7) in connection with a water conducting device (30) provided inside the pump housing (19) in the region in front of the two pressure connections (15, 16), in that on the housing (19) of the centrifugal pump (4) is provided a return chamber (20) with connections (21, 22) for the return of water at least from the two heating circuits (6, 8) to the primary heat exchanger (1) and with a ventilation device (26, 27), and in that a bypass (28) with a valve (29) is provided, which leads from the pressure chamber of the centrifugal pump (4) to the return chamber (2).

2. Gas boiler according to claim 1, characterised in that the ventilation device includes a baffle fin (26) provided in the return chamber (20) for the water entering this chamber.

3. Gas boiler according to claim 1, characterised in that the water conducting device in the pump housing (19) consists of a guide portion (31, 32) which is arranged between the pressure connections (15, 16) and which is stationary (30) or positionable by flow forces to close the connection.

4. Gas boiler according to claim 3, characterised in that the positionable guide portion (31) is a flexible component rigidly fastened between the two pressure connections (15, 16).

5. Gas boiler according to claim 1, characterised in that the centrifugal pump (4) is provided with temperature sensors (34) on the input and output sides.

## Revendications

1. Chaudière à gaz, pour le chauffage de locaux et la préparation d'eau chaude, avec un échangeur de chaleur primaire (3) chauffé au gaz, intégré dans un premier circuit de chauffage (6) destiné au chauffage de locaux, ainsi que dans un deuxième circuit de chauffage (8), le deuxième circuit de chauffage présentant, le cas échéant, un échangeur de chaleur secondaire (9) monté dans la chaudière à gaz (1), avec une pompe centrifuge (4), entraînée par un moteur, dont les performances sont susceptibles d'être modifiées, dont la tubulure d'aspiration (14) est prévue dans le conduit d'alimentation (5) de l'échangeur de chaleur primaire (3), ainsi qu'avec un dispositif à tubulure de refoulement, alimenté par la pompe, destiné à produire une circulation d'un courant de transport dans les circuits (6, 8), un dispositif de guidage d'eau (30, 31, 32), destiné à amener alternativement un débit chauffé dans l'échangeur de chaleur primaire (3) aux circuits de chauffage, étant prévu en amont du dispositif à tubulure de refoulement, caractérisée en ce que le dispositif à tubulure de refoulement est composé de deux tubulures de refoulement (15, 16), disposées sur le carter (19) de la pompe centrifuge (4) et dont l'une, située côté amenée, est raccordée au premier circuit de chauffage (6) et dont l'autre, située côté amenée, est raccordée au deuxième circuit de chauffage (8), ou au retour du premier circuit de chauffage (6),
en ce que l'amenée du débit chaud traversant la pompe centrifuge (4) peut être commandée par inversion du sens de rotation ou par inversion du sens de rotation et modification de la vitesse de rotation du rotor de pompe (7), en liaison avec un dispositif de guidage d'eau (30), prévu à l'intérieur du carter de pompe (19), dans la zone située devant les deux tubulures de refoulement (15, 16), en ce qu'est prévue sur le carter (19) de la pompe centrifuge (4) une chambre de débit de retour (20), équipée de raccordements (21, 22) pour le retour d'eau, venant au moins des deux circuits de chauffage (6, 8) et allant à l'échangeur de chaleur primaire (1), et avec un dispositif de désaération (26, 27), et en ce qu'une dérivation (28) menant de l'enceinte à pression de la pompe centrifuge (4) à la chambre de débit de retour (2) est pourvu d'une soupape (29).

2. Chaudière à gaz selon la revendication 1, caractérisée en ce que le dispositif de désaération comprend une nervure d'impact (26) prévue dans la chambre de débit de retour (20) pour l'eau entrant dans cette chambre.

3. Chaudière à gaz selon la revendication 1, caractérisée en ce que le dispositif de guidage de l'eau situé dans le carter de pompe (19) est composé d'une partie de guidage fixe (30) disposées entre les tubulures de refoulement (15, 16), ou d'une partie de guidage (31, 32) pouvant être positionnée et assurant la fermeture de la tubulure sous l'action des forces imputables à l'écoulement.

4. Chaudière à gaz selon la revendication 3, caractérisée en ce que la partie de guidage (31) pouvant être positionnée est un élément de construction flexible et enserré rigidement entre les deux tubulures de refoulement (15, 16).

5. Chaudière à gaz selon la revendication 1, caractérisée en ce que la pompe centrifuge (4) est pourvue du côté amenée et du côté évacuation de capteurs de température (34).
